(19) Europäisches Patentamt / European Patent Office / Office européen des brevets

(11) **EP 4 435 122 B1**

(12) **EUROPEAN PATENT SPECIFICATION**

(45) Date of publication and mention
of the grant of the patent:
**06.05.2026 Bulletin 2026/19**

(21) Application number: **22895249.5**

(22) Date of filing: **29.09.2022**

(51) International Patent Classification (IPC):
**C22C 9/00** (2006.01)   **C22F 1/00** (2006.01)
**C22F 1/08** (2006.01)   **H01M 4/66** (2006.01)
**B21B 1/40** (2006.01)   **H01M 10/0525** (2010.01)

(52) Cooperative Patent Classification (CPC):
**B21B 1/40; C22C 9/00; C22F 1/08; H01M 4/662;**
H01M 10/0525; Y02E 60/10

(86) International application number:
**PCT/JP2022/036556**

(87) International publication number:
**WO 2023/089963 (25.05.2023 Gazette 2023/21)**

(54) **ROLLED COPPER FOIL FOR SECONDARY BATTERIES, SECONDARY BATTERY NEGATIVE ELECTRODE USING SAME, AND SECONDARY BATTERY**

GEWALZTE KUPFERFOLIE FÜR SEKUNDÄRBATTERIEN, NEGATIVELEKTRODE FÜR SEKUNDÄRBATTERIE DAMIT UND SEKUNDÄRBATTERIE

FEUILLE DE CUIVRE LAMINÉE POUR BATTERIES SECONDAIRES, ÉLECTRODE NÉGATIVE DE BATTERIE SECONDAIRE L'UTILISANT, ET BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2021   JP 2021187377**

(43) Date of publication of application:
**25.09.2024   Bulletin 2024/39**

(73) Proprietor: JX Advanced Metals Corporation
**Tokyo 105-8417 (JP)**

(72) Inventor: **OKABE, Fumiya**
**Koza-gun, Kanagawa 253-0101 (JP)**

(74) Representative: **Mewburn Ellis LLP**
**Aurora Building**
**Counterslip**
**Bristol BS1 6BX (GB)**

(56) References cited:
**WO-A1-2015/041348     WO-A1-2020/179515**
**JP-A- 2012 243 454     JP-A- 2014 136 821**
**JP-A- 2016 191 139     JP-A- 2019 077 891**

## Description

### FIELD OF THE INVENTION

The present invention relates to a rolled copper foil for a secondary battery, and a secondary battery negative electrode and secondary battery using the same.

### BACKGROUND OF THE INVENTION

Secondary batteries, especially lithium-ion secondary batteries, have the characteristics of high energy density and the ability to obtain relatively high voltage, and are often used in small electronic devices such as notebook computers, video cameras, digital cameras, and mobile phones. In addition, lithium-ion secondary batteries have begun to be used as power sources for large devices such as electric vehicles and distributed power sources in general households, and because they are lighter and have higher energy density than other secondary batteries, they are widely used in a variety of devices that require power sources.

The electrode body of a lithium ion secondary battery generally has a wound structure or a stacked structure in which each electrode is laminated. It is common that the positive electrode of a lithium ion secondary battery is composed of a current collector made of aluminum foil and a positive electrode active material made of a lithium composite oxide such as $LiCoO_2$, $LiNiO_2$, and $LiMn_2O_4$ provided on the surface of the current collector, and the negative electrode is composed of a current collector made of copper foil and a negative electrode active material made of carbon or the like provided on the surface of the current collector.

For example, Patent Literature 1 (Japanese Patent Application Publication No. 2016-191139) discloses a rolled copper foil for a secondary battery, characterized in that it comprises a total of 100 to 500 ppm by weight of one or more selected from the group of Ti and Zr, an oxygen concentration is 50 ppm or less by weight, a tensile strength parallel to a rolling direction according to JIS-Z2241 after heat treatment at 350 °C for 1 hour is 350 MPa or more, and an electrical conductivity after the heat treatment is 90% IACS or more, and before and after the heat treatment, a rate of change in the tensile strength is 10% or less, and Zr or Ti inclusions with a major diameter of 1 $\mu$m to 5 $\mu$m within a range of 1000 $\mu m^2$ on the surface of the copper foil is 10 or less. It is disclosed that this rolled copper foil for a secondary battery has excellent strength, heat resistance, and electrical conductivity.

Furthermore, Patent Literature 2 (Japanese Patent Application Publication No. 2019-077891) discloses a rolled copper foil for a secondary battery, wherein in a direction parallel, a tensile strength to rolling is 600 MPa or more and an elongation at break is 2.0% or more, and in a direction perpendicular to rolling, a tensile strength is 640 MPa or more and an elongation at break is 3.5% or more. It is disclosed that this rolled copper foil for a secondary battery can satisfactorily suppress breakage of the copper foil due to stress generation due to volume change of the active material.

### PRIOR ART

Patent Literature

[Patent Literature 1] Japanese Patent Application Publication No. 2016-191139

[Patent Literature 2] Japanese Patent Application Publication No. 2019-077891

### SUMMARY OF THE INVENTION

On the other hand, next-generation lithium ion secondary batteries are desired to have a higher concentration of Si-based active materials, and depending on the application, a device with a significantly higher concentration of Si-based active materials than current batteries is required. Since the Si-based active material has a large rate of volume change during charging and discharging, a solvent-based binder is generally used to make it adhere strongly to the current collector copper foil. Depending on the type of the solvent-based binder, a drying temperature can reach up to 350 °C, and a drying time can take as long as about 2 to 3 hours, so conventional rolled copper foil for a secondary battery cannot maintain its strength if heat resistance is insufficient.

Further, as a result, the rolled copper foil for a secondary battery becomes soft or has insufficient strength, which causes wrinkles and bulges in the appearance of the battery during the early stages of charging and discharging, or deterioration of characteristics (battery capacity deterioration due to changes in shape and dimensions, and Li precipitation) after the charging and discharging cycles. Therefore, it is necessary to suppress the decrease in strength of rolled copper foil for a secondary battery by improving heat resistance.

The present invention was created in view of the above-mentioned problems, and in one embodiment, an object of the present invention is to provide a rolled copper foil for a secondary battery having heat resistance that maintains high strength even after a heat treatment. In another embodiment, an object of the present invention is to provide a secondary battery negative electrode and a secondary battery using such a rolled copper foil for a secondary battery.

As a result of intensive study, the inventors have found that by adding Zr at a higher concentration than in prior arts, it is possible to obtain a rolled copper foil for a secondary battery that has a low rate of change in tensile strength in the rolling direction before and after heat treatment even if it is heat treated under severe heat treatment conditions. The present invention was completed based on the above findings, and is defined in the appended claims.

According to the present invention, it is possible to provide a rolled copper foil for a secondary battery having heat resistance which maintains high strength even after a heat treatment, and a secondary battery negative electrode and secondary battery using such rolled copper foil for a secondary battery.

## DETAILED DESCRIPTION OF THE INVENTION

Hereinafter, embodiments of the present invention will now be described in detail. It should be understood that the present invention is not intended to be limited to the following embodiments, and any change, improvement or the like of the design may be appropriately added based on ordinary knowledge of those skilled in the art without departing from the spirit of the present invention.

(Composition of rolled copper foil for a secondary battery)

In the present embodiment, the rolled copper foil for a secondary battery contains 0.05 to 0.15% by weight of Zr. If the Zr content is less than 0.05% by weight, the heat resistance will not be sufficient, and the tensile strength of the copper foil will significantly decrease after the heat treatment, which will be described later. From this viewpoint, the Zr content is preferably more than 0.05% by weight, more preferably 0.06% by weight or more, even more preferably 0.07% by weight or more, and even more preferably 0.08% by weight or more.

If the Zr content exceeds 0.15% by weight, it will be in equilibrium with the Cu--Zr metal compound, so precipitates will tend to become coarse and pinholes will easily occur during the rolling step, raising concerns about productivity. From this viewpoint, the Zr content is preferably 0.14% by weight or less, more preferably 0.13% by weight or less, even more preferably 0.12% by weight or less, and even more preferably 0.11% by weight or less.

The material of the rolled copper foil for secondary batteries of the present invention, that is, the base copper containing Zr, is preferably the tough pitch copper specified in JIS-H3100-C1100 (2018) or the oxygen-free copper specified in JIS-H3100-C1020 (2018). Since these have compositions close to pure copper, the conductivity of the copper foil does not decrease and is suitable for current collectors. The oxygen concentration contained in the copper foil is 0.05% by weight (that is, 500% by weight) or less in the case of tough pitch copper, and 0.001% by weight (ie, 10% by weight) or less in the case of oxygen-free copper. The lower limit of the oxygen content is not particularly limited, but is typically 1 ppm by weight or more.

The copper foil according to the present invention is made of industrially used copper and contains inevitable impurities. Even if these inevitable impurities, such as P, Fe, Mg, S, Ge, and Ti, are present in minute amounts, the crystal orientation tends to rotate due to bending deformation of the copper foil, shear bands are also likely to occur, and cracks and breaks are likely to occur when the current collector is repeatedly bent and deformed. These are not preferable. Therefore, as inevitable impurities, it is preferable that the copper foil according to the present invention is controlled to contain one or more types selected from the group consisting of P, Fe, Mg, S, Ge, and Ti in a total amount of 0.002% by weight or less.

In addition, in this specification, when the term "copper foil" is used alone, it includes copper alloy foil, and "tough pitch copper and oxygen-free copper" is used alone, it includes copper alloy foil based on tough pitch copper and oxygen-free copper.

(Tensile strength of rolled copper foil for a secondary battery)

One of the features of the rolled copper foil for a secondary battery of the present embodiment is that the tensile strength in the direction parallel to rolling after a heat treatment at 350 °C for 3 hours is 500 MPa or more, and the rate of change in the tensile strength in the direction parallel to rolling before and after the heat treatment is 15% or less.

In the present invention, the tensile strength means the value when a tensile strength test based on IPC-TM-650 Test Method 2.4.18 (2012) is conducted in the direction parallel to rolling at room temperature (23 °C). The tensile strength after a heat treatment at 350 °C for 3 hours means the value when a tensile strength test based on IPC-TM-650 Test Method 2.4.18 (2012) is conducted in the direction parallel to rolling after heating at 350 °C for 3 hours, and then air cooling to room temperature (23 °C). The rate of change in tensile strength in the direction parallel to rolling before and after the heat treatment means the ratio of the absolute value of the amount of change in tensile strength in the direction parallel to rolling after the heat treatment to the tensile strength in the direction parallel to rolling before the heat treatment. Usually, the tensile strength in the direction parallel to rolling is reduced by a heat treatment above a certain level.

The rolled copper foil for a secondary battery of the present embodiment has a tensile strength of 500 MPa or more in the direction parallel to rolling even after being heat-treated under severe conditions of 350 °C for 3 hours. Furthermore, the rate of change in tensile strength in the direction parallel to rolling before and after the heat treatment is 15% or less. As a result, a secondary battery containing a large amount of Si-based active material can maintain high tensile strength even if subjected to thermal history due to drying of the solvent-based binder or the like, and it is possible to suppress the occurrence of problems such as wrinkles and deformation during initial charging and discharging, Li precipitation after charging and discharging cycles, battery capacity deterioration, and changes in shape and dimensions. From this point of view, the tensile strength of the rolled copper foil for a secondary battery in the direction parallel to rolling after the heat treatment at 350 °C for 3 hours is preferably 510 MPa or more, more preferably 520 MPa or more, even more preferably 530 MPa or more, even more preferably 540 MPa or more, and even more preferably 550 MPa or more.

From the same viewpoint, the rolled copper foil for a secondary battery preferably has a change rate in tensile strength in the direction parallel to rolling before and after the heat treatment of 14% or less, more preferably 13% or less, even more preferably 12% or less, and even more preferably 11% or less.

(Number of Zr inclusions)

In the present embodiment of the copper foil for a secondary battery, it is preferable that a number of Zr inclusions with a major diameter of 1 $\mu$m to 5 $\mu$m per Zr concentration within a range of 5000 $\mu$m$^2$ on the surface of the copper foil is 0.05 / (5000 $\mu$m$^2$/weight ppm) or less. Zr inclusions are usually oxides. If there are many inclusions, the risk of pinholes or breakage of the copper foil increases during the rolling step, making it difficult to roll at a high degree of processing, which is undesirable from the viewpoint of increasing strength. Furthermore, if there are many inclusions, the inclusions may fall off after the electrode active material is applied and the battery is assembled, causing problems in the operation of the battery.

From the above point of view, it is more preferable that the number of Zr inclusions with a major diameter of 1 $\mu$m to 5 $\mu$m per Zr concentration within a range of 5000 $\mu$m$^2$ on the surface of the copper foil is 0.04 / (5000 $\mu$m$^2$/weight ppm) or less, even more preferably 0.03 / (5000 $\mu$m$^2$/weight ppm) or less.

Further, in the present embodiment of the copper foil for a secondary battery, it is preferable that the number of Zr inclusions with a major diameter exceeding 5 $\mu$m per Zr concentration within a range of 5000 $\mu$m$^2$ on the surface of the copper foil is 0 / (5000 $\mu$m$^2$/weight ppm). By reducing the number of coarse inclusions as much as possible, rolling can be performed at a high degree of processing, making it easier to achieve high strength.

The method for reducing Zr inclusions on the surface of the rolled copper foil for secondary batteries is not particularly limited, and for example, a method for reducing the oxygen concentration in copper alloy ingots, which are raw materials for rolled copper foil for a secondary battery, a method of melting and casting an ingot under an inert atmosphere such as argon, and a method of separating and removing inclusions generated during melting can be adopted. The separation method is not particularly limited, but one or more of known techniques such as centrifugation, flotation, adsorbent separation, and the like can be employed depending on the level of inclusions required.

Since the number of Zr inclusions may change before and after the heat treatment at 350 °C for 3 hours, it is defined that the number is measured before the heat treatment. Note that a method for measuring the major diameter of the Zr inclusions will be described later.

(Thickness of rolled copper foil for a secondary battery)

The rolled copper foil for a secondary battery of the present embodiment preferably has a thickness of 10 $\mu$m or less. By setting the thickness to 10 $\mu$m or less, the energy density per unit weight of the battery can be increased. Although there is no particular lower limit to the thickness of the rolled copper foil for a secondary battery, handling properties can be improved by setting it to 5 $\mu$m or more, for example.

(Conductivity of rolled copper foil for a secondary battery)

In the present embodiment of the copper foil for a secondary battery, it is preferable that the conductivity after the heat treatment at 350 °C for 3 hours is 60% IACS (International Annealed Copper Standard) or higher. In this way, the rolled copper foil for a secondary battery can be effectively used as an electronic material. The electrical conductivity of the rolled copper foil for a secondary battery after the heat treatment at 350 °C for 3 hours is more preferably 70% IACS or more, and even more preferably 80% IACS or more. In addition, the conductivity can be measured in accordance with JIS H0505 (2018).

(Method for manufacturing rolled copper foil for a secondary battery)

The method for manufacturing the rolled copper foil for a secondary battery of the present embodiment is not particularly limited, but generally the rolled copper foil is manufactured by casting an ingot, hot rolling, and then repeating annealing and cold rolling as appropriate, and performing a final cold rolling to manufacture the final product. Pickling may be carried out as appropriate between or during each step.

In addition, increasing the total degree of processing in the final cold rolling step is advantageous for increasing the strength of the rolled copper foil for secondary batteries. Furthermore, by increasing the total degree of processing in the final cold rolling step, it is possible to enhance the effects of reducing the rate of change in tensile strength in the direction parallel to rolling before and after the heat treatment and improving electrical conductivity. In one embodiment of the present invention, the total degree of processing $\eta$ of the final cold rolling step is preferably 6.0 or more, and the total degree of processing $\eta$ of the final cold rolling step is more preferably 6.5 or more.

The total degree of processing $\eta$ in the final cold rolling step is expressed by the following formula.

$$\eta = \ln (T_0 / T_1)$$

in which, $T_0$: thickness of the material before the final cold rolling step, $T_1$: thickness of the material at the end of the final cold rolling step.

(Secondary battery negative electrode and secondary battery)

The rolled copper foil for secondary batteries of the present embodiment can be suitably used as a current collector for a secondary battery negative electrode. Therefore, another aspect of the present invention is a secondary battery negative electrode or a secondary battery, comprising the rolled copper foil for a secondary battery of the present invention.

**EXAMPLES**

Hereinafter, the present invention will be specifically explained with reference to Examples, but the explanation here is for the purpose of mere illustration and the present invention is not intended to be limited thereto.

Copper foils were manufactured using ingots having the compositions shown as Example 1 and Comparative Examples 1 to 5 in Table 1. The total degree of processing in the final cold rolling step was set to the degree of processing $\eta$ shown in Table 1. In addition, in Comparative Example 4, a large amount of Zr inclusions were observed at the stage after hot rolling, so the final cold rolling step was not performed.

In addition, Example 1, Comparative Example 1, and Comparative Example 2 applied the method of separating inclusions generated during melting as described above during ingot production. Examples 2 and 3 and Comparative Example 6 are estimated examples based on Example 1 and Comparative Examples 1 to 5. These estimated examples are listed at the bottom of Tables 1 and 2.

Table 1

| Manufacturing conditions | Means for removing inclusions | Composition of copper foil (weight ppm) | | | Degree of processing $\eta$ |
|---|---|---|---|---|---|
| | | Zr | Sn | Oxygen | |
| Example 1 | Applied | 900 | 0 | 10 | 6.5 or more |
| Comparative Example 1 | Applied | 150 | 0 | 10 | 2.3 |
| Comparative Example 2 | Applied | 900 | 0 | 10 | 2.3 |
| Comparative Example 3 | - | 190 | 0 | 10 | 2.3 |
| Comparative Example 4 | - | 900 | 0 | 10 | - |
| Comparative Example 5 | - | 0 | 1200 | 10 | 6.5 or more |
| Example 2 | Applied | 500 | 0 | 10 | 6.5 or more |
| Example 3 | Applied | 1500 | 0 | 10 | 6.5 or more |
| Comparative Example 6 | Applied | 2000 | 0 | 10 | 6.5 or more |

The following characteristics were evaluated for each sample thus obtained. The results are shown in Table 2.

<Tensile strength>

A test piece measuring 100 mm in the longitudinal direction and 12.7 mm in the width direction was prepared, and a tensile test was performed in the direction parallel to rolling using a tensile tester in accordance with IPC-TM-650 Test Method 2.4.18 (2012) to measure the tensile strength. The numerical value of the tensile strength was the average value of three among N = 5 excluding the maximum and minimum values. Further, the tensile strength of each sample was measured both before and after a heat treatment at 350 °C for 3 hours, and the tensile strength values were calculated in the same manner. The heat treatment was performed in a hot air drying oven. The sample was put into the furnace which was preheated to 350 °C, and after 3 hours, the sample was taken out of the furnace immediately and cooled in the air. After cooling to room temperature, various evaluations were performed.

<Conductivity>

A sample was taken so that the longitudinal direction of the test piece was parallel to the rolling direction, and the electrical conductivity (EC: %IACS) was measured using a four-probe method in accordance with JIS H0505 (2018). The electrical conductivity of each test piece was measured both before and after heat treatment at 350 °C for 3 hours.

<Number of Zr inclusions>

The number of Zr inclusions was investigated after the hot rolling step and after the final cold rolling step. The hot-rolled plate was processed by mechanically polishing the rolled surface and then electrolytically polishing it to elute copper so that the inclusions are exposed. For the copper foil after the final cold rolling step, the surface of the copper foil was subjected to electrolytic polishing to dissolve the copper so that the inclusions are exposed. For mechanical polishing, wet polishing was performed using #150, #600, #1200, and #2400 abrasive paper and 3 $\mu$m and 1 $\mu$m diamond pastes in this order. Polishing with each abrasive paper and diamond paste was carried out until the polishing marks left due to coarser grains disappeared. The electrolytic polishing was performed using a special mixed solution (250 ml of distilled water, 125 ml of ethanol, 125 ml of phosphoric acid, 25 ml of propanol, 2.5 g of urea) at room temperature and voltage of 10 V for 10 seconds. After that, a backscattered electron image was observed with a field emission scanning electron microscope (JSM-IT500HR manufactured by JEOL Ltd.) at an observation magnification of 1000 times and an observation field of 1000 $\mu$m$^2$. Areas with different color tones from the copper foil matrix were extracted by image analysis, and the maximum value of the distances between two parallel straight lines touching the outer periphery of each extracted area was taken as the major axis. The major axis of each particle within the observation field was measured, and the number of particles with a major axis of 1 to 5 $\mu$m and the number of particles with a major axis exceeding 5 $\mu$m were counted. The observation may be performed using either a secondary electron image or a backscattered electron image, but observation using a backscattered electron image is preferable since inclusions can be easily identified.

Table 2

| | Thickness (mm) | Heat treatment at 350 °C x 3 hours | | | | | | Number of inclusions of 1 to 5 μm after hot rolling (/100mm²) | Number of inclusions in copper foil | | |
| | | Tensile strength in direction parallel to rolling before heat treatment (MPa) | Tensile strength in direction parallel to rolling after heat treatment (MPa) | Tensile strength change rate before and after heat treatment (%) | Conductivity before heat treatment (% IACS) | Conductivity after heat treatment (% IACS) | Conductivity change rate before and after heat treatment (%) | | Size 1 to 5μm (/5000μm²) | Size exceeding 5 μm (/5000μm²) | Size 1 to 5μm per Zr concentration (/5000μm² · weight ppm) |
|---|---|---|---|---|---|---|---|---|---|---|---|
| Example 1 | 0.008 | 621 | 555 | 10.6 | 77.6 | 87.1 | 12.2 | 84 | 24.8 | 0 | 0.028 |
| Comparative Example 1 | 0.008 | 529 | 433 | 18.1 | 88.8 | 91.4 | 2.9 | 19 | 2.3 | 0 | 0.015 |
| Comparative Example 2 | 0.008 | 545 | 469 | 13.9 | 90.4 | 91.9 | 1.7 | 84 | 34.3 | 0 | 0.038 |
| Comparative Example 3 | 0.01 | 520 | 421 | 19.0 | 88.1 | 92.2 | 4.7 | 101 | 14.2 | 2 | 0.071 |
| Comparative Example 4 | 0.18 | - | - | - | - | - | - | 173 | - | - | - |
| Comparative Example 5 | 0.01 | 551 | 239 | 56.6 | 82.3 | 90.4 | 9.8 | - | - | - | - |
| Example 2 | 0.008 | 600 | 540 | 10.0 | 87.0 | 91.0 | 4.6 | 47 | 13.8 | 0 | 0.028 |
| Example 3 | 0.008 | 640 | 580 | 9.4 | 68.0 | 80.0 | 17.6 | 141 | 41.3 | 0 | 0.028 |
| Comparative Example 6 | 0.008 | 660 | 600 | 9.1 | 62.0 | 75.0 | 21.0 | 188 | 55.1 | 2 | 0.028 |

EP 4 435 122 B1

(Discussion)

As can be seen from Table 2, by containing 0.05 to 0.15% by weight of Zr and setting the total degree of processing η of the final cold rolling step to 6.5 or more, it is possible to obtain a rolled copper foil for a secondary battery in which the tensile strength in the direction parallel to rolling after heat treatment at 350 °C for 3 hours is 500 MPa or more, and the rate of change in tensile strength in the direction parallel to rolling before and after heat treatment is 15% or less.

Example 2 is an estimated example in which the Zr content is 0.05% by weight compared to Example 1. As the Zr content decreases, the tensile strength decreases and the electrical conductivity increases. However, due to the high total degree of processing η in the final cold rolling step, it is estimated that the change rate in the tensile strength in the direction parallel to rolling before and after the heat treatment is less than 15%, which sufficiently guarantees that the tensile strength in the direction parallel to rolling after the heat treatment is 500 MPa. Furthermore, it is estimated that the number of Zr inclusions with a major axis of 1 μm to 5 μm per Zr concentration within a range of 5000 μm$^2$ on the surface of the copper foil does not change.

Example 3 is an estimated example in which the Zr content is 0.15% by weight compared to Example 1. The tensile strength increases and the electrical conductivity decreases with increasing Zr content. However, due to the high total degree of processing η in the final cold rolling step, it is estimated that the change rate in the tensile strength in the direction parallel to rolling before and after the heat treatment is less than 15%, which sufficiently guarantees that the tensile strength in the direction parallel to rolling after the heat treatment is 500 MPa. Furthermore, it is estimated that the number of Zr inclusions with a major axis of 1 μm to 5 μm per Zr concentration within a range of 5000 μm$^2$ on the surface of the copper foil does not change.

In Comparative Examples 1 and 2, the total degree of processing η in the final cold rolling step was insufficient, so the tensile strength in the direction parallel to rolling after the heat treatment at 350 °C for 3 hours was less than 500 MPa.

In Comparative Example 3, the Zr content was low and the total degree of processing η in the final cold rolling step was insufficient, so the tensile strength in the rolling direction after the heat treatment at 350 °C for 3 hours was less than 500 MPa. Further, since the above-mentioned means for removing inclusions was not used, the number of Zr inclusions was large in Comparative Example 3.

In Comparative Example 4, a large amount of Zr inclusions were generated after hot rolling, so the final cold rolling step was not performed.

In Comparative Example 5, the total degree of processing η in the final cold rolling step was sufficient, but since it contained Sn instead of Zr, the heat resistance was not sufficient, and the rate of change in tensile strength in the direction parallel to rolling before and after the heat treatment at 350 °C for 3 hours exceeded 15%.

Comparative Example 6 is an estimated example in which the Zr content was 0.20% by weight compared to Example 1. The tensile strength increases and the electrical conductivity decreases with increasing Zr content. Furthermore, it is estimated that the number of Zr inclusions with a major axis of 1 μm to 5 μm per Zr concentration within a range of 5000 μm$^2$ on the surface of the copper foil does not change. On the other hand, since the inclusions tend to become coarser, it is estimated that the number of Zr inclusions with a major diameter exceeding 5 μm per Zr concentration in a range of 5000 μm$^2$ on the surface of the copper foil increases significantly.

For a lithium ion battery using the copper foil sample of Example 1, in a charge / discharge cycle test simulating actual use, the appearance of the battery cell and the appearance of the active material after the test were visually checked, and no expansion of the battery cell or white pattern of Li precipitation on the active material was observed.

On the other hand, for lithium ion batteries using the copper foil samples of Comparative Examples 1 and 2, after the charge / discharge cycle test, there were multiple locations where the battery cell expanded, and a white pattern of Li precipitation was observed on the active material.

**Claims**

1. A rolled copper foil for a secondary battery, comprising 0.05 to 0.15% by weight of Zr, 0.05% by weight or less of oxygen, and the balance consisting of Cu and unavoidable impurities,
   wherein a tensile strength in a direction parallel to rolling after a heat treatment at 350 °C for 3 hours is 500 MPa or more, and a rate of change in the tensile strength in the direction parallel to rolling before and after the heat treatment is 15% or less.

2. The rolled copper foil for a secondary battery according to claim 1, wherein the tensile strength in the direction parallel to rolling after the heat treatment is 550 MPa or more.

3. The rolled copper foil for a secondary battery according to claim 1 or 2, wherein a number of Zr inclusions with a major diameter of 1 μm to 5 μm per Zr concentration within a range of 5000 μm$^2$ on a surface of the copper foil is 0.05 / (5000

$\mu$m$^2$/weight ppm) or less.

4. The rolled copper foil for a secondary battery according to any one of claims 1 to 3, wherein a number of Zr inclusions with a major diameter exceeding 5 $\mu$m per Zr concentration within a range of 5000 $\mu$m$^2$ on a surface of the copper foil is 0 / (5000 $\mu$m$^2$/weight ppm).

5. The rolled copper foil for a secondary battery according to any one of claims 1 to 4, having a thickness of 10 $\mu$m or less.

6. The rolled copper foil for a secondary battery according to any one of claims 1 to 5, wherein a conductivity after the heat treatment is 60% IACS or more.

7. A secondary battery negative electrode, comprising the rolled copper foil for a secondary battery according to any one of claims 1 to 6.

8. A secondary battery, comprising the rolled copper foil for a secondary battery according to any one of claims 1 to 6.

**Patentansprüche**

1. Gewalzte Kupferfolie für einen Akkumulator, umfassend 0,05 bis 0,15 Gew.-% Zr, 0,05 Gew.-% oder weniger Sauerstoff, wobei der Rest aus Cu und unvermeidlichen Verunreinigungen besteht, wobei eine Zugfestigkeit in einer Richtung parallel zur Walzrichtung nach dreistündiger Wärmebehandlung bei 350 °C 500 MPa oder mehr beträgt und eine Änderungsrate der Zugfestigkeit in der Richtung parallel zur Walzrichtung vor und nach der Wärmebehandlung 15 % oder weniger beträgt.

2. Gewalzte Kupferfolie für einen Akkumulator nach Anspruch 1, wobei die Zugfestigkeit in der Richtung parallel zur Walzrichtung nach der Wärmebehandlung 550 MPa oder mehr beträgt.

3. Gewalzte Kupferfolie für einen Akkumulator nach Anspruch 1 oder 2, wobei eine Anzahl von Zr-Einschlüssen mit einem Hauptdurchmesser von 1 $\mu$m bis 5 $\mu$m pro Zr-Konzentration in einem Bereich von 5.000 $\mu$m$^2$ auf einer Oberfläche der Kupferfolie 0,05/(5.000 $\mu$m$^2$/Gew.-ppm) oder weniger beträgt.

4. Gewalzte Kupferfolie für einen Akkumulator nach einem der Ansprüche 1 bis 3, wobei eine Anzahl von Zr-Einschlüssen mit einem Hauptdurchmesser von mehr als 5 $\mu$m pro Zr-Konzentration in einem Bereich von 5.000 $\mu$m$^2$ auf einer Oberfläche der Kupferfolie 0/(5.000 $\mu$m$^2$/Gew.-ppm) beträgt.

5. Gewalzte Kupferfolie für einen Akkumulator nach einem der Ansprüche 1 bis 4, die ein Dicke von 10 $\mu$m oder weniger aufweist.

6. Gewalzte Kupferfolie für einen Akkumulator nach einem der Ansprüche 1 bis 5, wobei eine Leitfähigkeit nach der Wärmebehandlung 60 % IACS oder mehr beträgt.

7. Akkumulator-Katode, umfassend eine gewalzte Kupferfolie für einen Akkumulator nach einem der Ansprüche 1 bis 6.

8. Akkumulator, umfassend eine gewalzte Kupferfolie für einen Akkumulator nach einem der Ansprüche 1 bis 6.

**Revendications**

1. Feuille de cuivre laminée pour une batterie secondaire, comprenant de 0,05 à 0,15 % en poids de Zr, 0,05 % en poids ou moins d'oxygène, le reste étant constitué de Cu et d'impuretés inévitables, dans laquelle une résistance à la traction dans une direction parallèle au laminage après un traitement thermique à 350°C pendant 3 heures est de 500 MPa ou plus, et un taux de changement de la résistance à la traction dans la direction parallèle au laminage avant et après le traitement thermique est de 15 % ou moins.

2. Feuille de cuivre laminée pour une batterie secondaire selon la revendication 1, dans laquelle la résistance à la traction dans la direction parallèle au laminage après le traitement thermique est de 550 MPa ou plus.

**3.** Feuille de cuivre laminée pour une batterie secondaire selon la revendication 1 ou 2, dans laquelle un nombre d'inclusions de Zr avec un diamètre principal de 1 $\mu$m à 5 $\mu$m par concentration de Zr dans une plage de 5 000 $\mu$m$^2$ sur une surface de la feuille de cuivre est de 0,05/(5 000 $\mu$m$^2$/ppm en poids) ou moins.

**4.** Feuille de cuivre laminée pour une batterie secondaire selon l'une quelconque des revendications 1 à 3, dans laquelle un nombre d'inclusions de Zr avec un diamètre principal dépassant 5 $\mu$m par concentration de Zr dans une plage de 5 000 $\mu$m$^2$ sur une surface de la feuille de cuivre est de 0/(5 000 $\mu$m$^2$/ppm en poids).

**5.** Feuille de cuivre laminée pour une batterie secondaire selon l'une quelconque des revendications 1 à 4, présentant une épaisseur de 10 $\mu$m ou moins.

**6.** Feuille de cuivre laminée pour une batterie secondaire selon l'une quelconque des revendications 1 à 5, dans laquelle une conductivité après le traitement thermique est de 60 % IACS ou plus.

**7.** Électrode négative de batterie secondaire, comprenant la feuille de cuivre laminée pour une batterie secondaire selon l'une quelconque des revendications 1 à 6.

**8.** Batterie secondaire, comprenant la feuille de cuivre laminée pour une batterie secondaire selon l'une quelconque des revendications 1 à 6.

**EP 4 435 122 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016191139 A

- JP 2019077891 A